# EUROPÄISCHE PATENTSCHRIFT

(11) **EP 1 767 824 B1**
(45) Veröffentlichungstag und Bekanntmachung des Hinweises auf die Patenterteilung: **13.04.2011**
(21) Anmeldenummer: 05108778.1
(22) Anmeldetag: 22.09.2005
(51) Int. Cl.: F16H 61/12, F16H 61/688

(54) **Hydraulische Steuerungsvorrichtung für ein automatisiertes Doppelkupplungsgetriebe**
Hydraulic controller for an automated double clutch gearbox
Système de commande hydraulique pour une boîte de vitesses à double embrayage automatisée

(43) Veröffentlichungstag der Anmeldung: 28.03.2007
(73) Patentinhaber: Getrag Ford Transmissions GmbH, 50735 Köln (DE)
(72) Erfinder: Leibbrandt, Martin, Dr., 50181 Bedburg (DE); Moehlmann, Reinhard, 50739 Köln (DE)

(56) Entgegenhaltungen:
- DE-A1- 10 134 115

## Beschreibung

Die Erfindung betrifft eine hydraulische Steuerungsvorrichtung für ein automatisiertes Doppelkupplungsgetriebe, das eine erste Kupplung und eine zweite Kupplung aufweist.

Doppelkupplungsgetriebe sind seit längerem bekannt und werden bevorzugt in Kraftfahrzeugen eingesetzt. Ein Doppelkupplungsgetriebe weist im Allgemeinen ein erstes und ein zweites Teilgetriebe auf, denen jeweils eine Gruppe von Gängen zugeordnet ist. Durch die erste Kupplung lässt sich dabei das erste Teilgetriebe von einem Motor des Kraftfahrzeugs trennen, während die zweite Kupplung dazu dient, das zweite Teilgetriebe vom Motor zu trennen bzw. mit diesem zu verbinden.

Aufgrund des erheblichen mechanischen Aufwands, die zwei Kupplungen zu betätigen, sowie die Gänge der beiden Teilgetriebe zu schalten, sind Doppelkupplungsgetriebe zumeist automatisiert ausgebildet, d. h. sowohl die Betätigung der Kupplungen als auch das Schalten der Gänge erfolgt über zugeordnete Hilfsantriebe, die durch vorzugsweise eine hydraulische Steuerungsvorrichtung angesteuert werden.

Automatisierte Doppelkupplungsgetriebe weisen oft keine direkte mechanische Eingriffsmöglichkeit des Fahrers des Kraftfahrzeuges auf die Drehmomentübertragung des Doppelkupplungsgetriebes auf. In einigen Doppelkupplungsgetrieben lässt sich lediglich eine Parksperre durch den Fahrer des Kraftfahrzeugs mechanisch betätigen.

Die hydraulische Steuerungsvorrichtung sollte aus Sicherheitsgründen möglichst so ausgelegt sein, dass im Falle eines Fehlers jederzeit der Drehmomentfluss durch das Doppelkupplungsgetriebe sicher unterbrochen werden kann. Dies lässt sich durch Öffnen der Kupplungen erreichen. Dazu werden die Kupplungen drucklos gestellt, soweit es sich um hydraulisch betätigte Kupplungen handelt, die im nicht druckbeaufschlagten Zustand geöffnet sind ("normally open clutch").

Ein Ausfluss der obigen Forderung ist, dass ein Drehmomentfluss auch dann noch unterbrochen werden sollte, wenn zwei Einzelfehler nacheinander auftreten, die eine direkte Auswirkung aufeinander haben können.

Neben der oben beschriebenen Forderung bezüglich der Sicherheit des Doppelkupplungsgetriebes ist auch die Forderung einer möglichst guten Verfügbarkeit des Kraftfahrzeugs nachzukommen, indem das Doppelkupplungsgetriebe eingebaut ist. Die Forderung einer guten Verfügbarkeit gilt allgemein dann als erfüllt, wenn im Falle eines Einzelfehlers zumindest ein Vorwärtsgang und ein Rückwärtsgang zur Verfügung stehen, um das Kraftfahrzeug in zwei Richtungen bewegen zu können.

Die Forderungen hinsichtlich Sicherheit und Verfügbarkeit sind bei bekannten Steuerungsvorrichtungen für Doppelkupplungsgetriebe oft nicht erfüllt. So ist beispielsweise aus der DE 101 34 115 A1 bekannt, die erste Kupplung (dies gilt sinngemäß auch für die zweite Kupplung) über einen hydraulischen Pfad anzusteuern, der aus einem ersten Schaltventil und einem zum Schaltventil in Reihe geschalteten ersten Regelventil besteht. Das erste Schaltventil, das durch ein elektrisches Steuersignal betätigbar ist, stellt die erste Kupplung in einer Ruhestellung drucklos und verbindet in einer stromangeregten Stellung die Hauptdruckleitung mit dem ersten Regelventil, das durch ein elektrisches Steuersignal gesteuert wird. Lässt sich beispielsweise das erste Schaltventil nicht mehr aus dessen Ruhestellung schalten, kann die erste Kupplung nicht mehr betätigt werden. Wird über diese Kupplung das Rückwärtsfahren realisiert, ist bei Auftreten eines einzelnen Fehlers (Ausfall des ersten Schaltventils) das Kraftfahrzeug nach obiger Maßgabe nicht mehr verfügbar.

Auf der anderen Seite kann die erste Kupplung, soweit sie zum Schließen einen Betätigungsdruck benötigt, nicht mehr geöffnet werden, wenn sich einerseits das Schaltventil nicht mehr in die Ruhestellung bringen lässt und andererseits der Druck oder das Volumen durch das Regelventil nicht mehr ausreichend abgesenkt werden kann. In diesem Fall bleibt die erste Kupplung geschlossen und der Drehmomentfluss in dem Doppelkupplungsgetriebe lässt sich nicht mehr trennen.

Gleiches gilt auch für die zweite Kupplung. Das Doppelkupplungsgetriebe weist für die zweite Kupplung ein zweites Schaltventil und ein zweites Regelventil auf, wobei sich - in analoger Weise zur ersten Kupplung - die gleichen Zusammenhänge ergeben.

Der Erfindung liegt daher die Aufgabe zugrunde, eine hydraulische Steuerungsvorrichtung für ein automatisiertes Doppelkupplungsgetriebe bereitzustellen, die einfach und kostengünstig aufgebaut ist und eine möglichst hohe Betriebssicherheit und eine möglichst hohe Verfügbarkeit aufweist.

Die der Erfindung zugrunde liegende Aufgabe wird durch die Steuerungsvorrichtung gemäß Anspruch 1 gelöst. Bevorzugte Ausführungsformen können den Unteransprüchen entnommen werden.

Die erfindungsgemäße Steuerungsvorrichtung gemäß Anspruch 1 zeichnet sich dadurch aus, dass ein durch ein erstes Steuersignal und durch ein zweites Steuersignal betätigbares Trennventil in einer Trennstellung die Kupplungen drucklos stellt und/oder von der Regelventileinheit trennt, wobei bei Anliegen des zweiten Steuersignals das Trennventil eine Normalstellung einnimmt, so dass wenigstens eine der Kupplungen durch die Regelventileinheit betätigbar ist.

Durch das Trennventil ist es somit möglich, unabhängig von den Stellungen, die das erste Schaltventil und das zweite Schaltventil einnehmen, die Kupplungen drucklos zu stellen und damit, soweit es sich um Kupplungen handelt, die nur bei Druckbeaufschlagung Drehmoment übertragen können, den Drehmomentfluss durch das Doppelkupplungsgetriebe sicher zu unterbrechen.

Durch das zweite Steuersignal wird sichergestellt, dass das Trennventil aus der Trennstellung in die Normalstellung geschaltet werden kann, auch wenn das erste Steuersignal aufgrund einer Störung unbeabsichtigt anliegt. Das Trennventil ist so ausgelegt, dass bei gleichzeitigem Anliegen von erstem und zweitem Steuersignal sich die Normalstellung einstellt.

Der Begriff "Steuersignale" soll auch hydraulische Steuerdrücke oder Steuervolumen umfassen, soweit es sich um hydraulisch angesteuerte Ventile handelt. Dies ist bevorzugt bei den Schaltventilen und auch dem Trennventil der Fall.

In einem bevorzugten Ausführungsbeispiel trennt das Trennventil in der Trennstellung die Regelventileinheit von einer Hauptdruckleitung. In diesem Fall liegt das Trennventil zwischen einer Hauptdruckversorgung und der Regelventileinheit. Es kann so gestaltet sein, dass es in der Trennstellung die Leitungen zwischen Regelventileinheit und der ersten und zweiten Kupplung mit einem Ölsumpf bzw. mit einem Tank verbindet und dadurch drucklos stellt.

Vorzugsweise ist dem zweiten Schaltventil ein Signalelement zugeordnet, das das Steuersignal für das zweite Schaltventil sowie das zweite Steuersignal für das Trennventil bereitstellt, bei dessen Anliegen das Trennventil die Normalstellung einnimmt. Das dem zweiten Schaltventil zugeordnete Signalelement dient im Normalbetrieb zur Erzeugung des Signalelementes, mit dem das zweite Schaltventil betätigbar ist. Gleichzeitig liefert das Signalelement dasjenige Steuersignal, durch das das Trennventil wieder in die Normalstellung gebracht werden kann, unabhängig davon, ob das erste Steuersignal an dem Trennventil anliegt oder nicht.

In einem bevorzugten Ausführungsbeispiel nimmt bei Anliegen des zweiten Steuersignals an dem Trennventil das zweite Schaltventil eine Stellung B_{II} ein, in der die zweite Kupplung drucklos gestellt ist und/oder von der Regelventileinheit getrennt ist. Somit arbeiten das zweite Schaltventil und das Trennventil im Gegentakt: Liegt das erste Steuersignal an dem Trennventil an, wird die zweite Kupplung durch das Trennventil drucklos gestellt. Liegt hingegen das zweite Steuersignal an dem Trennventil an, so wird es, unabhängig von dem Anliegen des ersten Steuersignals, in die Normalstellung geschaltet bzw. in dieser gehalten, so dass nun das Trennventil die beide Kupplungen nicht mehr drucklos stellt. Jedoch findet sich nun das zweite Schaltventil zwangsläufig in der Stellung B_{II}, in der die zweite Kupplung ebenfalls drucklos gestellt wird.

In einem bevorzugten Ausführungsbeispiel kann das Trennventil durch ein Steuersignal einer Ansteuerung betätigt werden, durch die eine weitere Ventileinheit der hydraulischen Steuerungsvorrichtung angesteuert wird. Dadurch lässt sich ein Signalelement einsparen, das in der Regel elektrisch betätigt wird und mit vergleichsweise hohen Kosten verbunden ist. Somit wird ein ohnehin schon in der hydraulischen Steuerungsvorrichtung vorhandenes Steuersignal zur Aktivierung/Betätigung des Trennventils verwendet. Dabei sollte es sich um ein Steuersignal handeln, welches bei Aktivierung des Trennventils keine unerwünschten Nebenwirkungen auslöst.

Vorzugsweise ist die Ansteuerung als Zweibereichsregler ausgelegt, wobei in einem ersten Bereich die weitere Ventileinheit angesteuert wird und in entsprechenden Grenzen regelbar ist. In einem zweiten Bereich kann das Trennventil betätigt werden. Solange sich der Zweibereichsregler im ersten Bereich befindet, findet kein Schaltvorgang des Trennventils statt. Erst wenn der zweite Bereich erreicht wird, kann über die Ansteuerung das Trennventil aktiviert werden.

Vorzugsweise nimmt im zweiten Bereich die weitere Ventileinheit eine Notstellung ein. Diese Notstellung ist so auszulegen, dass die Ventileinheit ihre zugedachte Aufgabe zumindest in einem ausreichenden Maße noch erfüllen kann.

Die weitere Ventileinheit kann als Kühlölregulator ausgebildet sein. Dieser Kühlölregulator kann ein Proportionalregler sein, der im ersten Bereich des Zweibereichsreglers die Kühlölmenge reguliert und im zweiten Bereich die Kupplungen mit einer minimal notwendigen Menge an Kühlöl versorgt.

In einem bevorzugten Ausführungsbeispiel stellt die Regelventileinheit wenigstens einen regelbaren Druck und/oder regelbaren Volumenstrom zur Betätigung eines Gangschaltsystems zum Ein-/Auslegen von Gängen im Doppelkupplungsgetriebe bereit. Somit übernimmt die Regelventileinheit nicht nur die Aufgabe, die erste und zweite Kupplung zu betätigen, sondern auch die Gänge im Doppelkupplungsgetriebe automatisch ein- und auszulegen.

Das erste Schaltventil kann in der Stellung A₁ das erste Regelventil mit der ersten Kupplung verbinden und von dem Gangschaltsystem trennen und in der Stellung B₁ das erste Regelventil mit dem Gangschaltsystem verbinden und von der ersten Kupplung trennen, während das zweite Schaltventil in einer Stellung A₂ das zweite Regelventil mit der zweiten Kupplung verbinden und von dem Gangschaltsystem trennen kann und in einer Stellung B₂ das zweite Regelventil mit dem Gangschaltsystem verbinden und von der zweiten Kupplung trennen kann.

Durch diese Anordnung der Regelventile und der Schaltventile lässt sich durch entsprechende Stellungen B₁, B₂ das Gangschaltsystem zum Schalten der Gänge mit beiden Regelventilen verbinden. Dadurch wird die Möglichkeit gegeben, dass sowohl das erste Regelventil als auch das zweite Regelventil einen geregelten Druck oder geregelten Volumenstrom für das Gangschaltsystem zur Verfügung stellen kann. Dieses Ausführungsbeispiel ermöglicht somit ein Schalten der Gänge, unabhängig davon, welches der beiden Regelventile ausfällt.

Zudem weist das Ausführungsbeispiel den Vorteil auf, dass durch lediglich zwei Regelventile sowohl die beiden Kupplungen betätigt als auch die Gänge geschaltet werden können. Dadurch lassen sich die Kosten für die Herstellung einer derartigen Steuerungsvorrichtung niedrig halten, da Regelventile, wie ein Druckregler oder ein Stromregler im Vergleich zu Schaltventilen teurer sind.

Zwischen dem ersten Schaltventil bzw. dem zweiten Schaltventil und dem Gangschaltsystem kann ein Umschalter vorgesehen sein, der sicherstellt, dass das Gangschaltsystem entweder nur mit dem Druck-/Volumenstrom des ersten Regelventils oder nur mit dem Druck-/Volumenstrom des zweiten Regelventils beaufschlagt wird. Dieser Umschalter dient dazu, die Verbindung zwischen dem Gangschaltsystem und dem Regelventil zu trennen, das (augenblicklich) nicht für die Steuerung des Schaltsystems vorgesehen ist oder aufgrund einer Störung die Steuerung nicht übernehmen kann. Die Steuerung des Gangschaltsystems wird daher nicht durch eine ungewollte Überlagerung von zwei Regelventilen, von denen eines möglicherweise defekt ist, beeinträchtigt.

Vorzugsweise ist der Umschalter als Wechselventil ausgebildet. Das Wechselventil, z. B. in Ausbildung eines Drei-Wege-Kugelventils, weist dabei einen ersten und zweiten Eingang sowie einen Ausgang auf, wobei der erste Eingang mit dem ersten Regelventil und der zweite Eingang mit dem zweiten Regelventil verbunden ist. Der Ausgang des Umschalters ist mit dem Gangschaltsystem verbunden. Das Wechselventil stellt eine Verbindung zwischen Ausgang und dem Eingang her, an dem ein höherer Druck anliegt, während es gleichzeitig die Verbindung zwischen Ausgang und dem Eingang mit niedrigerem Druck trennt.

In einem bevorzugten Ausführungsbeispiel ist in der Stellung B_{I} des ersten Schaltventils und in der Stellung B_{II} des zweiten Schaltventils das erste Regelventil mit der zweiten Kupplung und das zweite Regelventil mit der ersten Kupplung verbunden. Dadurch lassen sich die erste und die zweite Kupplung weiterhin betätigen, auch wenn eines der Regelventile ausgefallen ist. Ist beispielsweise das erste Regelventil ausgefallen, kann die erste Kupplung über das zweite Regelventil angesteuert werden, soweit sich das erste und zweite Schaltventil jeweils in der Stellung B_{I}, B_{II} befinden. Die zweite Kupplung lässt sich weiterhin ebenfalls durch das zweite Regelventil betätigen, wenn das zweite Schaltventil in die Stellung A_{II} geschaltet wird. Davon unbenommen kann das zweite Regelventil weiterhin die Steuerung des Gangschaltsystems übernehmen, wenn das zweite Schaltventil sich in der Stellung B_{II} befindet. Zwar ist bei Ausfall eines Regelventils ein Schalten ohne Zugkraftunterbrechung nicht mehr möglich, jedoch lässt sich das Doppelkupplungsgetriebe noch in jedem Gang schalten und auch in diesem Gang betreiben.

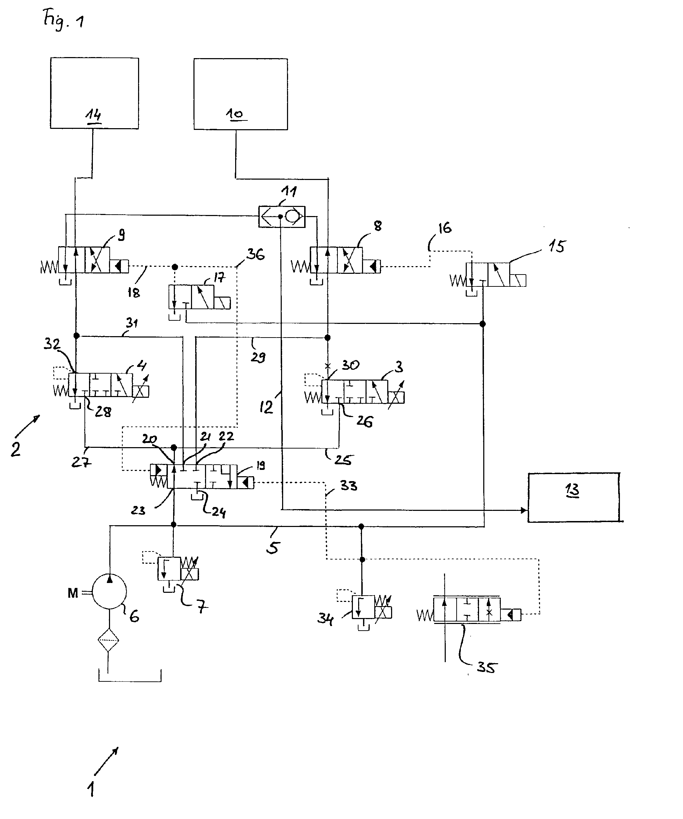

Anhand eines in Figur 1 dargestellten Ausführungsbeispiels wird die Erfindung näher erläutert. Figur 1 zeigt dabei ein Blockschaltbild eines bevorzugten Ausführungsbeispiels.

Eine in ihrer Gesamtheit mit 1 bezeichnete Steuerungsvorrichtung umfasst eine Regelventileinheit 2 mit einem ersten Druckregelventil bzw. Druckregler 3 und einem zweiten Druckregler 4. Eingangsseitig lassen sich die beiden Druckregler 3, 4 mit einer Hauptdruck-Sammelleitung 5 verbinden. Eine Pumpe 6 in Verbindung mit einem Hauptdruckregler 7 sorgt für den entsprechenden Hauptdruck.

Dem ersten Druckregler 3 ist ein erstes Schaltventil 8 und dem zweiten Druckregler 4 ein zweites Schaltventil 9 zugeordnet. Durch das erste Schaltventil 8 lässt sich der erste Druckregler 3 entweder mit einer ersten Kupplung 10 oder mit einem als Druckumschalter ausgebildeten Umschalter 11 verbinden, der über eine Leitung 12 mit einem hier nicht weiter dargestellten Gangschaltsystem 13 verbunden ist. Mittels des zweiten Schaltventils 9 lässt sich ein geregelter Druck des zweiten Druckreglers 4 entweder auf den Druckumschalter 11 oder eine zweite Kupplung 14 schalten.

Mit der Steuerungsvorrichtung 1 lässt sich ein Doppelkupplungsgetriebe mit zwei separaten Kupplungen (vgl. erste Kupplung 10 und zweite Kupplung 14) sowie mit mehreren Stellgliedern des Gangschaltsystems 13 steuern, durch die einzelne Gänge des Doppelkupplungsgetriebes eingelegt oder ausgelegt werden können. Das Doppelkupplungsgetriebe umfasst dabei ein erstes und zweites Teilgetriebe, die der ersten bzw. zweiten Kupplung 10, 14 zugeordnet sind. Wird ein Druck auf einen Kupplungszylinder einer Kupplung gegeben, wird die Kupplung geschlossen, die ansonsten durch eine Federkraft offen gehalten wird. Im geschlossenen Zustand überträgt die Kupplung ein Drehmoment zwischen einer Antriebseinheit und dem zugehörigen Teilgetriebe.

Zum Betätigen des ersten Schaltventils 8 ist ein Signalelement 15 vorgesehen. Das Signalelement 15 ist über eine Signalleitung 16 mit dem ersten Schaltventil 8 verbunden. Das Signalelement 15 wird dabei durch ein elektrisches Signal angesteuert und schaltet im angeregten Zustand den Hauptdruck über die Signalleitung 16 auf das erste Schaltventil 8. In der in Figur 1 dargestellten Stellung des Signalelements 15 wird die Signalleitung 16 entlüftet bzw. drucklos gestellt, so dass das erste Schaltventil 8 die in der Figur 1 dargestellte Ruhestellung oder eine Stellung A_{I} einnimmt. Wird der Hauptdruck als Steuerdruck auf das erste Schaltventil 8 geschaltet, wird die erste Kupplung 10 drucklos gestellt und gleichzeitig der erste Druckregler 3 mit dem Umschalter 11 verbunden, so dass nun ein geregelter Druck über die Leitung 12 zum Gangschaltsystem 13 gelangen kann.

Zum Betätigen des zweiten Schaltventils 9 ist ein Signalelement 17 vorgesehen, das über eine Signalleitung 18 einen Steuerdruck an das zweite Schaltventil 9 leitet. Wie auch das Signalelement 15 ist das Signalelement 17 ein Ventil, das elektrisch angesteuert wird. Im angeregten Zustand leitet es den Hauptdruck 5 als Steuerdruck über die Signalleitung 18 auf das zweite Schaltventil 9, das dann von der in Figur 1 dargestellten Ruhestellung oder von einer Stellung A_{II} in die angeregte Stellung oder Stellung B_{II} schaltet. In der Stellung A_{II} besteht eine Verbindung zwischen zweitem Druckregler 4 und Kupplung 14. In der Stellung B_{II} wird die zweite Kupplung 14 drucklos gestellt und der zweite Druckregler 4 mit dem Umschalter 11 verbunden.

Die Steuerungsvorrichtung 1 umfasst des Weiteren ein Trennventil 19. Das Trennventil 19 ist als hydraulisch betätigbares 5/2-Wege-Schaltventil mit drei Ausgängen 20, 21, 22 und zwei Eingängen 23, 24 ausgebildet. Der Ausgang 20 des Trennventils 19 ist über eine Leitung 25 mit einem Eingang 26 des ersten Druckreglers 3 verbunden. Des Weiteren verbindet eine Leitung 27 den Ausgang 20 des Trennventils 19 mit einem Eingang 28 des zweiten Druckreglers 4. Der Eingang 23 des Trennventils 19 ist mit der Hauptdruck-Sammelleitung 5 verbunden.

In einer in der Figur 1 dargestellten Normalstellung verbindet das Trennventil 19 über den Eingang 23 und den Ausgang 20 die Hauptdruck-Sammelleitung 5 mit den Eingängen 26, 28 der Druckregler 3, 4. Somit steht in der Normalstellung des Trennventils 19 eingangsseitig der Hauptdruck an den Druckreglern 3, 4 an.

Über eine Leitung 29 ist der Ausgang 22 des Trennventils 19 mit einem Ausgang 30 des ersten Druckreglers 3 verbunden. In analoger Weise verbindet eine Leitung 31 den Ausgang 21 des Trennventils 19 mit einem Ausgang 32 des zweiten Druckreglers 4. In einer von der Normalstellung abweichenden Stellung, einer Trennstellung, ist die Verbindung zwischen dem Eingang 23 und dem Ausgang 20 des Trennventils unterbrochen. Damit trennt das Trennventil in der Trennstellung die Hauptdruck-Sammelleitung 5 von den Eingängen 26, 28 der Druckregler 3, 4. Des Weiteren werden in der Trennstellung die Ein-/Ausgänge 21, 22, 24 des Trennventils 19 miteinander verbunden. Da Eingang 24 des Trennventils 19 mit einem Tank oder Ölsumpf verbunden ist, werden in der Trennstellung die Leitungen 29, 31 und somit auch die Ausgänge 30, 32 der Druckregler 3, 4 drucklos gestellt. Dadurch werden die Kupplungen 10, 14 drucklos gestellt bzw. belüftet, so dass beide Kupplungen 10, 14 kein Drehmoment mehr übertragen können.

Das hydraulisch betätigbare Trennventil 19 erhält einen ersten Steuerdruck über eine Signalleitung 33 von einer Kühlölansteuerung 34. Die Kühlölansteuerung 34 ist als Zweibereichsregler ausgebildet. In einem ersten Druckbereich des Zweibereichsreglers 34 lässt sich ein Kühlölregulator 35 steuern, der eine geregelte Kühlölmenge bereitstellt. In einem zweiten Bereich des Zweibereichsreglers 34 schaltet der Kühlölregulator 35 in eine Notstellung, in der über eine Blende für eine begrenzte, aber ausreichend große Kühlölmenge gesorgt ist.

Neben dem Steuerdruck, der von der Kühlölansteuerung 34 erzeugt wird, lässt sich das Trennventil 19 durch einen zweiten Steuerdruck betätigen. Bereitgestellt wird dieser zweite Steuerdruck durch das Signalelement 17, das über eine Signalleitung 36 mit dem Trennventil 19 verbunden ist. Das Trennventil 19 ist dabei so ausgelegt, dass bei Anliegen des zweiten Steuerdrucks unabhängig von dem ersten Steuerdruck das Trennventil 19 die in der Figur 1 dargestellte Normalstellung einnimmt.

Wie der Figur 1 zu entnehmen ist, liegt, wenn das Signalelement 17 den Hauptdruck auf die Signalleitungen 18, 36 durchschaltet, der Hauptdruck gleichzeitig an dem zweiten Schaltventil 9 und dem Trennventil 19 an. In diesem Fall wird die zweite Kupplung 14 durch das zweite Schaltventil 9 drucklos gestellt. Liegt jedoch nur der erste Steuerdruck an dem Trennventil 19 an, weil beispielsweise das Signalelement 17 den Hauptdruck nicht durchschalten kann, so befindet sich das Trennventil 19 in der Trennstellung, in der die zweite Kupplung 14 ebenfalls drucklos gestellt wird.

Durch das Trennventil 19 weist die erfindungsgemäße Steuerungsvorrichtung 1 eine zusätzliche Möglichkeit auf, den Drehmomentfluss in dem Doppelkupplungsgetriebe in oben beschriebener Weise zu unterbrechen. Die Ansteuerung des Trennventils 19 durch das zweite Steuersignal oder durch den zweiten Steuerdruck, der von dem Signalelement 17 über die Leitung 36 zum Trennventil 19 gelangt, ermöglicht ein Schalten des Trennventils in die Normalstellung. Damit wird sicher vermieden, dass trotz eines Fehlers bezüglich des ersten Steuerdrucks das Doppelkupplungsgetriebe über die erste Kupplung 10 Drehmoment übertragen kann. Der ersten Kupplung 10 sollte daher zweckmäßigerweise mit dem Teilgetriebe in Verbindung stehen, das mindestens ein Vorwärtsgang und ein Rückwärtsgang eines Fahrzeuges umfasst, in dem das Doppelkupplungsgetriebe eingebaut ist. Somit lässt sich auch bei einem Fehler bezüglich des ersten Steuersignals das Kraftfahrzeug in beide Richtungen noch bewegen.

### Bezugszeichenliste

- 1: Steuerungsvorrichtung
- 2: Regelventileinheit
- 3: erster Druckregler
- 4: zweiter Druckregler
- 5: Hauptdruck-Sammelleitung
- 6: Pumpe
- 7: Hauptdruckregler
- 8: erstes Schaltventil
- 9: zweites Schaltventil
- 10: erste Kupplung
- 11: Umschalter
- 12: Leitung
- 13: Gangschaltsystem
- 14: zweite Kupplung
- 15: Signalelement
- 16: Signalleitung
- 17: Signalelement
- 18: Signalleitung
- 19: Trennventil
- 20: Ausgang
- 21: Ausgang
- 22: Ausgang
- 23: Eingang
- 24: Eingang
- 25: Leitung
- 26: Eingang
- 27: Leitung
- 28: Eingang
- 29: Leitung
- 30: Ausgang
- 31: Leitung
- 32: Ausgang
- 33: Signalleitung
- 34: Kühlölansteuerung
- 35: Kühlölregulator
- 36: Leitung

## Patentansprüche

1. Hydraulische Steuerungsvorrichtung (1) für ein automatisiertes, eine erste Kupplung (10) und eine zweite Kupplung (14) aufweisendes Doppelkupplungsgetriebe, mit einer Regelventileinheit (2), die wenigstens einen regelbaren Druck und/oder einen regelbaren Volumenstrom für die Betätigung der ersten und zweiten Kupplung (10, 14) vorgibt und ein erstes Regelventil (3) und ein zweites Regelventil (4) umfasst, und mit einer Schaltventileinheit, durch die die Kupplungen (10, 14) drucklos gestellt werden können und/oder von der Regelventileinheit (2) trennbar sind, wobei die Schaltventileinheit ein erstes Schaltventil (8) und ein zweites Schaltventil (9) umfasst, die jeweils durch ein Steuersignal betätigbar sind, **dadurch gekennzeichnet, dass** ein durch ein erstes Steuersignal und durch ein zweites Steuersignal betätigbares Trennventil (19) in einer Trennstellung die Kupplungen (10, 14) drucklos stellt und/oder von der Regelventileinheit (2) trennt, wobei das Trennventil (19) bei Anliegen des zweiten Steuersignals eine Normalstellung einnimmt, sodass wenigstens eine der Kupplungen (10, 14) durch die Regenventileinheit (2) betätigbar ist.

2. Steuerungsvorrichtung (1) nach Anspruch 1, **dadurch gekennzeichnet, dass** das Trennventil (19) in der Trennstellung die Regelventileinheit (2) von einer Hauptdruckleitung (5) trennt.

3. Steuerungsvorrichtung (1) nach Anspruch 1 oder 2, **dadurch gekennzeichnet, dass** dem zweiten Schaltventil (9) ein Signalelement (17) zugeordnet ist, das das Steuersignal für das zweite Schaltventil (9) sowie das zweite Steuersignal für das Trennventil (19) bereitstellt, bei dessen Anliegen das Trennventil (19) die Normalstellung einnimmt.

4. Steuerungsvorrichtung (1) nach einem der Ansprüche 1 bis 3, **dadurch gekennzeichnet, dass** bei Anliegen des zweiten Steuersignals an dem Trennventil (19) das zweite Schaltventil (9) eine Stellung Bₗₗ einnimmt, in der die zweite Kupplung (14) drucklos gestellt ist und/oder von der Regelventileinheit (2) getrennt ist.

5. Steuerungsvorrichtung (1) nach einem der Ansprüche 1 bis 4, **dadurch gekennzeichnet, dass** das erste Steuersignal für das Trennventil (19) von einer Ansteuerung (34) erzeugt wird, durch die eine weitere Ventileinheit (35) angesteuert wird.

6. Steuerungsvorrichtung (1) nach Anspruch 5, **dadurch gekennzeichnet, dass** die Ansteuerung (34) als Zweibereichsregler ausgelegt ist, wobei in einem ersten Bereich die weitere Ventileinheit (35) angesteuert wird und in einem zweiten Bereich das Trennventil (19) betätigbar bzw. in die Trennstellung schaltbar ist.

7. Steuerungsvorrichtung (1) nach Anspruch 6, **dadurch gekennzeichnet, dass** im zweiten Bereich die weitere Ventileinheit (35) eine Notstellung einnimmt.

8. Steuerungsvorrichtung (1) nach einem der Ansprüche 5 bis 7, **dadurch gekennzeichnet, dass** die weitere Ventileinheit (35) zur Regulierung von Kühlöl dient.

9. Steuerungsvorrichtung (1) nach einem der Ansprüche 1 bis 8, **dadurch gekennzeichnet, dass** die Regelventileinheit (2) wenigstens einen regelbaren Druck und/oder regelbaren Volumenstrom zur Betätigung eines Gangschaltsystems (13) zum Ein-/Auslegen von Gängen im Doppelkupplungsgetriebe bereitstellt.

10. Steuerungsvorrichtung (1) nach Anspruch 9, **dadurch gekennzeichnet, dass** das erste Schaltventil (8) in der Stellung Aₗ das erste Regelventil (3) mit der ersten Kupplung (10) verbindet und von dem Gangschaltsystem (13) trennt und in der Stellung B_{I} das erste Regelventil (3) mit dem Gangschaltsystem (13) verbindet und von der ersten Kupplung (10) trennt und das zweite Schaltventil (9) in einer Stellung A_{II} das zweite Regelventil (4) mit der zweiten Kupplung (14) verbindet und vom Gangschaltsystem (13) trennt und in einer Stellung B_{II} das zweite Regelventil (4) mit dem Gangschaltsystem (13) verbindet und von der zweiten Kupplung (14) trennt.

11. Steuerungsvorrichtung (1) nach Anspruch 10, **dadurch gekennzeichnet, dass** zwischen dem ersten Schaltventil (8) beziehungsweise dem zweiten Schaltventil (9) und dem Gangschaltsystem (13) ein Umschalter (11) vorgesehen ist, der sicherstellt, dass das Gangschaltsystem (13) entweder mit dem Druck/Volumenstrom des ersten Regelventils (3) oder mit dem Druck/Volumenstrom des zweiten Regelventils (4) beaufschlagt wird.

12. Steuerungsvorrichtung (1) nach Anspruch 11, **dadurch gekennzeichnet, dass** der Umschalter (11) vorzugsweise als 3-Wege-Kugelventil ausgebildet ist.

13. Steuerungsvorrichtung (1) nach einem der Ansprüche 1 bis 11, **dadurch gekennzeichnet, dass** in der Stellung B_{I} des ersten Schaltventils (8) und in einer Stellung B_{II} des zweiten Schaltventils (9) eine Verbindung zwischen dem ersten Regelventil (3) und der zweiten Kupplung (14) und eine Verbindung zwischen dem zweiten Regelventil (4) und der ersten Kupplung (10) hergestellt ist.

## Claims

1. Hydraulic control device (1) for an automatic dual-clutch transmission which has a first clutch (10) and a second clutch (14), having a regulating valve unit (2) which predefines at least one pressure and/or one volume flow, which can be regulated, for actuating the first and second clutches (10, 14) and comprises a first regulating valve (3) and a second regulating valve (4), and having a relay valve unit, by means of which the clutches (10, 14) can be placed in an unpressurized state and/or can be separated from the regulating valve unit (2), the relay valve unit comprising a first relay valve (8) and a second relay valve (9) which can each be operated by means of a control signal, **characterized in that**, in an isolating position, an isolating valve (19), which can be operated by means of a first control signal and by means of a second control signal, places the clutches (10, 14) in an unpressurized state and/or separates said clutches (10, 14) from the regulating valve unit (2), the isolating valve (19) assuming a normal position when the second control signal is applied, so that at least one of the clutches (10, 14) can be operated by the regulating valve unit (2).

2. Control device (1) according to Claim 1, **characterized in that** the isolating valve (19), in the isolating position, separates the regulating valve unit (2) from a main pressure line (5).

3. Control device (1) according to Claim 1 or 2, **characterized in that** the second relay valve (9) is assigned a signal element (17) which provides the control signal for the second relay valve (9) and the second control signal for the isolating valve (19), said isolating valve (19) assuming the normal position when said second control signal is applied.

4. Control device (1) according to one of Claims 1 to 3, **characterized in that**, when the second control signal is applied to the isolating valve (19), the second relay valve (9) assumes a position B_{II}, in which the second clutch (14) is placed in an unpressurized state and/or is separated from the regulating valve unit (2).

5. Control device (1) according to one of Claims 1 to 4, **characterized in that** the first control signal for the separating valve (19) is generated by an actuator (34) which actuates a further valve unit (35).

6. Control device (1) according to Claim 5, **characterized in that** the actuator (34) is designed as a dual-region regulator, the further valve unit (35) being actuated in a first region, and it being possible for the isolating valve (19) to be operated, or placed in the isolating position, in a second region.

7. Control device (1) according to Claim 6, **characterized in that**, in the second region, the further valve unit (35) assumes an emergency position.

8. Control device (1) according to one of Claims 5 to 7, **characterized in that** the further valve unit (35) serves to regulate cooling oil.

9. Control device (1) according to one of Claims 1 to 8, **characterized in that** the regulating valve unit (2) provides at least one pressure and/or volume flow, which can be regulated, for actuating a gearshift system (13) for engaging/disengaging gears in the dual-clutch transmission.

10. Control device (1) according to Claim 9, **characterized in that** the first relay valve (8), in the position A_{I}, connects the first regulating valve (3) to the first clutch (10) and separates said first regulating valve from the gearshift system (13) and, in the position B_{I}, connects the first regulating valve (3) to the gearshift system (13) and separates said first regulating valve (3) from the first clutch (10), and the second relay valve (9), in a position A_{II}, connects the second regulating valve (4) to the second clutch (14) and separates said second regulating valve (4) from the gearshift system (13) and, in a position B_{II}, connects the second regulating valve (4) to the gearshift system (13) and separates said second regulating valve (4) from the second clutch (14).

11. Control device (1) according to Claim 10, **characterized in that** a changeover switch (11) is provided between the first relay valve (8) and also the second relay valve (9) and the gearshift system (13), said changeover switch (11) ensuring that the gearshift system (13) is acted on either by the pressure or volume flow of the first regulating valve (3) or by the pressure or volume flow of the second regulating valve (4).

12. Control device (1) according to Claim 11, **characterized in that** the changeover switch (11) is preferably embodied as a 3-way ball valve.

13. Control device (1) according to one of Claims 1 to 11, **characterized in that**, in the position B_{I} of the first relay valve (8), and in a position B_{II} of the second relay valve (9), a connection is produced between the first regulating valve (3) and the second clutch (14), and a connection is produced between the second regulating valve (4) and the first clutch (10).

## Revendications

1. Dispositif de commande hydraulique (1) pour une boîte de vitesses à double embrayage automatisée présentant un premier embrayage (10) et un deuxième embrayage (14), avec une unité de soupape de régulation (2), qui prédéfinit au moins une pression réglable et/ou un débit volumique réglable pour l'actionnement du premier et du deuxième embrayage (10, 14), et qui comprend une première soupape de régulation (3) et une deuxième soupape de régulation (4), et avec une unité de soupape de commutation, qui permet de commuter sans pression les embrayages (10, 14) et/ou de les séparer de l'unité de soupape de régulation (2), l'unité de soupape de commutation comprenant une première soupape de commutation (8) et une deuxième soupape de commutation (9), qui peuvent chacune être actionnées par un signal de commande, **caractérisé en ce qu'**une soupape de séparation (19) pouvant être actionnée par un premier signal de commande et par un deuxième signal de commande, dans une position de séparation, met les embrayages (10, 14) dans un état sans pression et/ou les sépare de l'unité de soupape de régulation (2), la soupape de séparation (19), lors de l'application du deuxième signal de commande, adoptant une position normale, de sorte qu'au moins l'un des embrayages (10, 14) puisse être actionné par l'unité de soupape de régulation (2).

2. Dispositif de commande (1) selon la revendication 1, **caractérisé en ce que** la soupape de séparation (19), dans la position de séparation, sépare l'unité de soupape de régulation (2) d'une conduite de pression principale (5).

3. Dispositif de commande (1) selon la revendication 1 ou 2, **caractérisé en ce que** l'on associe à la deuxième soupape de commutation (9) un élément de signal (17) qui fournit le signal de commande pour la deuxième soupape de commutation (9) ainsi que le deuxième signal de commande pour la soupape de séparation (19), lors de l'application duquel la soupape de séparation (19) adopte la position normale.

4. Dispositif de commande (1) selon l'une quelconque des revendications 1 à 3, **caractérisé en ce que**, lors de l'application du deuxième signal de commande à la soupape de séparation (19), la deuxième soupape de commutation (9) adopte une position B_{II} dans laquelle le deuxième embrayage (14) est mis dans un état sans pression et/ou est séparé de l'unité de soupape de régulation (2).

5. Dispositif de commande (1) selon l'une quelconque des revendications 1 à 4, **caractérisé en ce que** le premier signal de commande pour la soupape de séparation (19) est produit par une commande (34) qui permet de commander une unité de soupape supplémentaire (35).

6. Dispositif de commande (1) selon la revendication 5, **caractérisé en ce que** la commande (34) est conçue sous forme de régulateur à deux plages, dans lequel, dans une première plage, l'unité de soupape supplémentaire (35) est commandée, et dans une deuxième plage, la soupape de séparation (19) peut être actionnée ou peut être commutée dans la position de séparation.

7. Dispositif de commande (1) selon la revendication 6, **caractérisé en ce que**, dans la deuxième plage, l'unité de soupape supplémentaire (35) adopte une position de secours.

8. Dispositif de commande (1) selon l'une quelconque des revendications 5 à 7, **caractérisé en ce que** l'unité de soupape supplémentaire (35) sert à la régulation d'huile de refroidissement.

9. Dispositif de commande (1) selon l'une quelconque des revendications 1 à 8, **caractérisé en ce que** l'unité de soupape de régulation (2) fournit au moins une pression réglable et/ou un débit volumique réglable pour l'actionnement d'un système de changement de vitesse (13) pour l'enclenchement/la sortie de vitesses dans la boîte de vitesses à double embrayage.

10. Dispositif de commande (1) selon la revendication 9, **caractérisé en ce que** la première soupape de commutation (8), dans la position A_{I}, relie la première soupape de régulation (3) au premier embrayage (10) et la sépare du système de changement de vitesse (13), et, dans la position B_{I}, relie la première soupape de régulation (3) au système de changement de vitesse (13) et la sépare du premier embrayage (10), et la deuxième soupape de commutation (9), dans une position A_{II}, relie la deuxième soupape de régulation (4) au deuxième embrayage (14) et la sépare du système de changement de vitesse (13), et, dans une position B_{II}, relie la deuxième soupape de régulation (4) au système de changement de vitesse (13) et la sépare du deuxième embrayage (14).

11. Dispositif de commande (1) selon la revendication 10, **caractérisé en ce qu'**un inverseur (11) est prévu entre la première soupape de commutation (8), respectivement la deuxième soupape de commutation (9), et le système de changement de vitesse (13), qui garantit que le système de changement de vitesse (13) soit sollicité soit avec la pression/le débit volumique de la première soupape de régulation (3), soit avec la pression/le débit volumique de la deuxième soupape de régulation (4).

12. Dispositif de commande (1) selon la revendication 11, **caractérisé en ce que** l'inverseur (11) est réalisé de préférence sous forme de soupape sphérique à 3 voies.

13. Dispositif de commande (1) selon l'une quelconque des revendications 1 à 11, **caractérisé en ce que**, dans la position B_{I} de la première soupape de commutation (8), et dans une position B_{II} de la deuxième soupape de commutation (9), une connexion entre la première soupape de régulation (3) et le deuxième embrayage (14) a lieu, et une connexion entre la deuxième soupape de régulation (4) et le premier embrayage (10) a lieu.
